Europäisches Patentamt

European Patent Office

Office européen des brevets

(19)

(11) Numéro de publication: **0 298 797**
**B1**

(12) **FASCICULE DE BREVET EUROPEEN**

(45) Date de publication du fascicule du brevet: **09.01.91**

(51) Int. Cl.⁵: **F 16 D 66/02**

(21) Numéro de dépôt: **88401479.6**

(22) Date de dépôt: **15.06.88**

(54) **Témoin d'usure d'organe de friction pour frein de véhicule automobile et organe de friction équipé d'un tel témoin.**

(30) Priorité: **25.06.87 FR 8708918**
**14.08.87 FR 8711580**

(43) Date de publication de la demande:
**11.01.89 Bulletin 89/02**

(45) Mention de la délivrance du brevet:
**09.01.91 Bulletin 91/02**

(84) Etats contractants désignés:
**BE DE ES FR GB IT**

(56) Documents cités:
**EP-A-0 206 487**
**DE-C-2 813 244**
**FR-A-2 418 387**
**FR-A-2 485 133**
**US-A-4 298 857**
**US-A-4 374 375**

(73) Titulaire: **BENDIX EUROPE Services Techniques S.A.**
**126 rue de Stalingrad**
**F-93700 Drancy (FR)**

(72) Inventeur: **Fargier, Eric**
**BENDIX FRANCE 126 rue de Stalingrad**
**F-93700 Drancy (FR)**
Inventeur: **Mery, Jean-Claude**
**BENDIX FRANCE 126 rue de Stalingrad**
**F-93700 Drancy (FR)**

(74) Mandataire: **Lejet, Christian**
**Bendix Europe Service Techniques Service Brevets 126 rue de Stalingrad**
**F-93700 Drancy (FR)**

Courier Press, Leamington Spa, England.

**Description**

La présente invention est relative à un témoin d'usure d'organe de friction et, plus particulièrement, à un tel témoin conçu pour équiper un organe de friction de frein à disque ou à tambour pour véhicule automobile.

On connaît de tels témoins qui procèdent par mise à la masse du véhicule d'un conducteur électrique lorsque l'épaisseur d'une garniture de l'organe de friction perpendiculairement à son plan d'usure, devient inférieure à une valeur prédéterminée au dessous de laquelle la qualité et la fiabilité du freinage sont considérées comme inacceptables. Cette mise à la masse résulte ordinairement de l'usure d'une gaine protégeant le conducteur, par un disque ou tambour métallique solidaire en rotation d'une roue de véhicule et formant partie du frein, le conducteur étant alors mis en contact avec ce disque ou tambour. Un circuit électrique commande alors le passage d'un courant dans le conducteur, courant qui provoque l'allumage d'un voyant. Ce signal prévient l'utilisateur du véhicule de ce que l'organe de friction est usé et doit donc être remplacé.

Du fait qu'un courant ne peut passer dans le conducteur qu'après une mise à la masse, il n'est pas possible de tester le bon fonctionnement du circuit et du voyant avant que l'organe de friction n'ait atteint son usure limite.

Pour pallier cet inconvénient, on a conçu des témoins d'usure dans lesquels le conducteur électrique forme une boucle qui est coupée lorsque l'usure limite de l'organe de friction associé est atteinte. La continuité électrique de la boucle peut alors être testée à tout moment avant la rupture de cette boucle.

La présente invention a pour but de réaliser un témoin d'usure de ce type, qui assure une rupture nette de la boucle quand l'usure limite de l'organe de friction associé est atteinte, qui est de mise en place facile et sûre et de réalisation peu coûteuse.

Du document DE—A—2 813 244, il est connu un témoin d'usure d'une garniture de friction pour frein de véhicule automobile présentant les caractéristiques du préambule de la première revendication.

Selon la présente invention, les moyens de fixation comprennent en outre une patte, le téton étant placé sur le témoin d'usure de part et d'autre d'une partie déformable de celui-ci et s'accrochent après pliage de la partie déformable, dans une ouverture percée dans la patte.

Selon un autre mode de réalisation, on peut prévoir que les moyens de fixation sont constitués par une pièce amovible et un téton placés sur le témoin de part et d'autre d'une partie déformable de celui-ci, le téton étant conformé pour passer dans un trou percé près d'un bord de l'organe de friction et s'accrocher, après pliage de la partie déformable du corps, dans une ouverture percée dans la pièce amovible.

Le témoin suivant l'invention peut être réalisé par moulage du corps et du téton en une seule pièce, ce qui simplifié le moule utilisé en abaissant donc son coût, la pièce amovible prenant alors la forme d'une pièce rapportée à monter sur le témoin pour la fixation de celui-ci sur l'organe de friction.

Au dessin annexé, donné seulement à titre d'exemple:

—la figure 1 est une vue en coupe axiale de témoin d'usure suivant l'invention, avant sa fixation sur l'organe de friction associé,

—la figure 2 est une vue en coupe axiale du témoin de la figure 1, après sa fixation sur l'organe de friction associé,

—la figure 3 est une vue du témoin d'usure de la figure 2, prise suivant la flèche F de cette figure,

—les figures 4 à 6 sont analogues aux figures 1 à 3, et représentent un deuxième mode de réalisation du témoin d'usure suivant l'invention,

—la figure 7 est analogue aux figures 2 et 5 et représente un troisième mode de réalisation du témoin d'usure selon l'invention équipé d'une pièce amovible, et

—les figures 8 et 9 sont des vues en plan de deux modes de réalisation de la pièce amovible du témoin d'usure selon l'invention.

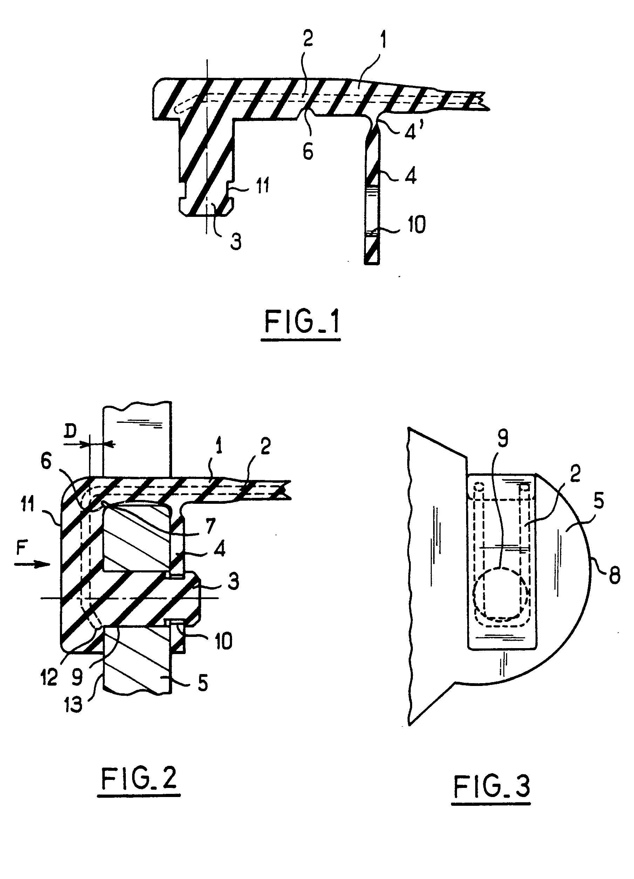

Sur la figure 1, il apparaît que le témoin suivant l'invention comprend essentiellement un corps 1 en matière plastique dans lequel est noyé un conducteur électrique filiforme 2. Un téton 3 et une patte 4, convenablement espacés, débordent d'un même côté du corps 1 pour constituer des moyens de fixation du témoin sur un organe de friction.

Le pied 4' de la patte 4 est aminci pour donner de la souplesse à celle-ci et autoriser ainsi un certain basculement de la patte sur le corps 1, qui facilité le montage du témon sur l'organe de friction.

L'ensemble de ces éléments du témoin peut être réalise par surmoulage du conducteur 1 avec une matière plastique convenable, choisie par l'homme de métier en fonction des caractéristiques qui vont suivre parmi les très nombreuses matières plastiques du commerce utilisables dans l'invention. Cette matière plastique doit être suffisamment souple pour permettre le pliage du corps 1 du témoin dans la position représentée à la figure 2. A l'effet de faciliter ce pliage, un sillon d'affaiblissement 6 transversal est formé dans le corps, entre le téton 3 et la patte 4, dans une position qui correspond à la partie du corps qui fait face à une arête 7 de la plaque de support 5 lorsque le témoin est monté sur celle-ci. En outre, la matière plastique choisie doit pouvoir être arrachée facilement par frottement sur une pièce métallique rotative, comme on le verra plus loin. A titre d'exemple, le polyimide vendu sous la dénomination "VESPEL" par la société Dupont de Nemours convient pour le témoin suivant l'invention, ainsi que la résine fluorocarboné connue sous le nom de Teflon PFA.

La figure 2 représente le témoin suivant l'invention, fixé sur une plaque de support 5 formant partie d'un organe de friction pour frein à disque qui comporte en outre une garniture de friction (non représentée) fixée sur cette plaque. Un tel type d'organe de friction est décrit et représenté dans le brevet EP—A—0 100 273 auquel on pourra se reporter pour plus de détail, sans que cet exemple soit limitatif. De préférence, on fixe le témoin sur une partie de la plaque de support qui est écartée de celle qui porte la garniture, par exemple dans une partie latérale de cette plaque de support limitée par un profil circulaire 8 et prévue pour coopérer avec des profils circulaires complémentaires d'un support fixe d'un frein à disque à étrier coulissant, par exemple, comme représenté au brevet précité.

Pour fixer le témoin suivant l'invention sur la plaque de support 5, on insère le téton 3 suivant la flèche F (Fig. 2) dans un trou 9 percé dans cette plaque et on rabat le corps 1 et la patte 4 autour de l'arête 7 grâce au sillon 6 pour faire passer l'extrémité débordante du téton 3 dans une ouverture 10 percée dans la patte 4 en regard de cette extrémité. Des moyens de retenue constitués par une gorge annulaire 11 creusée près de l'extrémité du téton 3, assurent l'accrochage de la patte 4 sur le téton, par appui sur le bord de l'ouverture 10.

On remarquera que le témoin ainsi installé pince fermement la plaque de support 5 en s'appuyant sur deux plages de cette plaque qui constituent de larges surfaces, assurant l'appui du témoin quand celui-ci est soumis à des efforts développés par une pièce rotative telle qu'un disque solidaire d'une roue de véhicule et qui coopère, lors d'un freinage, avec la garniture portée par la plaque de support. La face 11 du corps 1 est parallèle au plan de rotation du disque. La garniture s'usant, ce disque finit par venir en contact avec cette face 11 du témoin dont la matière plastique s'arrache alors progressivement par frottement jusqu'au moment où le disque vient en contact avec le conducteur 2. Suivant une mise en oeuvre du témoin donnée seulement à titre d'exemple, il y a alors mise à la masse du conducteur 2 et allumage d'un voyant lumineux commandé par un circuit électrique approprié relié à ce conducteur, uniquement lors des périodes de freinage, pour signaler un début d'usure des garnitures.

Sur la figure 2, on remarque que le conducteur 2 prend parallèlement au plan d'usure, la forme d'une boucle qui descend jusqu'au niveau du téton 3. Si donc l'usure du témoin se poursuit malgré l'alerte périodique qui se manifeste comme expliqué ci-dessus, et que le disque arrive à couper complètement le fil, un voyant d'alerte permanente peut être excité pour signaler à l'utilisateur du véhicule que la limite d'usure des patins est atteinte ou dépassée et qu'un remplacement du patin s'impose d'urgence.

Sur la figure 2, il apparaît que l'extrémité 12 de la boucle, formée par le conducteur 2 dans le corps 1, est pliée vers la plaque de support. Cette disposition permet d'assurer l'ancrage de la boucle dans le corps quand le disque de frein commence à attaquer la boucle, jusqu'à la rupture franche de cette boucle par la poursuite du frottement développé par le disque. On évite ainsi des ruptures erratiques de cette boucle.

Sur la figure 2, il apparaît clairement aussi que la boucle se développe dans un plan sensiblement parallèle au plan d'usure. C'est la distance $D$ du plan de la boucle à la face en regard 13 de la plaque de support qui définit l'épaisseur minimale tolérable de la garbiture portée par cette plaque. Des essais ont démontré que cette disposition tangentielle de la boucle assure une coupure de la boucle par le disque plus franche que lorsque cette boucle est orientée perpendiculairement au plan d'usure comme dans certains témoins d'usure de la technique antérieure, où cette disposition perpendiculaire accroît la résistance du fil de la boucle à une coupure par le disque.

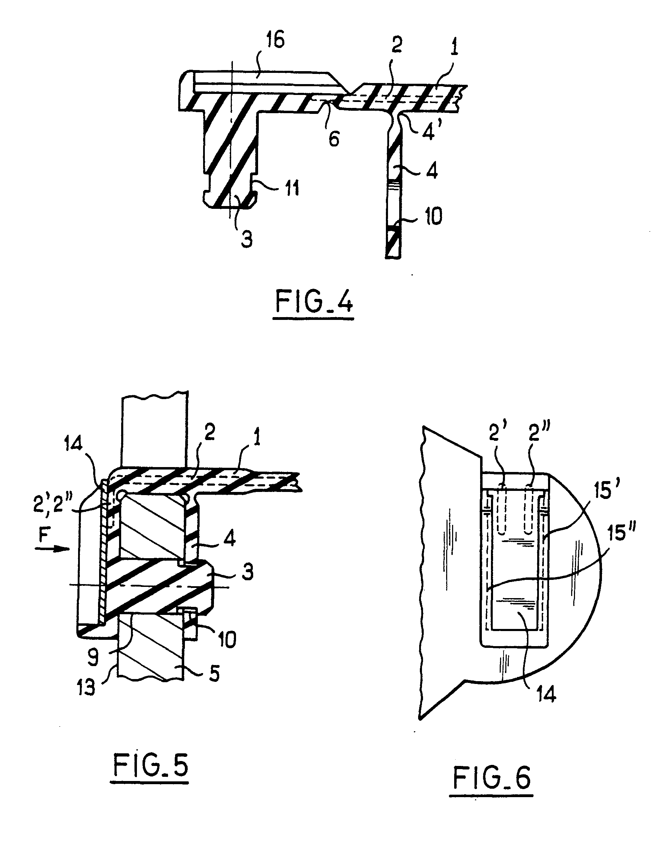

On a représenté aux figures 4 à 6 un deuxième mode de réalisation du témoin d'usure suivant l'invention, conçu pour assurer une rupture encore plus nette de la continuité électrique du conducteur. A bien d'autres égards les deux modes de réalisation du témoin suivant l'invention sont très semblables et des références numériques identiques repèrent au dessin des éléments similaires des deux témoins.

Le témoin des figures 4 à 6 se distingue du précédent en ce que la continuité électrique du conducteur est assurée dans le corps 1 par une plaquette métallique 14 qui ponte par contact deux extrémités 2', 2'' adjacentes de fils formant partie du conducteur 2 (voir figures 5 et 6). La plaquette est glissé dans des rainures 15', 15'' formées dans le corps, au fond d'une découpe 16 creusée dans la partie supérieure du corps 1 (Figure 4).

Pour réaliser le témoin d'usure des figures 4 à 6, on surmoule les extrémités 2', 2'' des fils du conducteur 2 de manière que celles-ci restent dénudées au fond de la découpe 16. Après avoir légèrement plié le témoin autour du sillon 6 pour dégager l'entrée des rainures 15', 15'', on glisse la plaquette métallique 14 dans ces rainures, contre les extrémités 2', 2'' du conducteur 2 et contre le fond de la découpe, de manière à assurer un contact intime entre la plaquette et les extrémités 2', 2''.

En fonctionnement, lorsque le disque du frein vient attaquer tangentiellement le témoin et la plaquette 14, celle-ci se détache brusquement des extrémités 2', 2'' quand le frottement développé par le disque devient suffisant pour arracher la plaquette du fond de la découpe 16. L'ouverture du circuit 2', 2'' est alors bien nette.

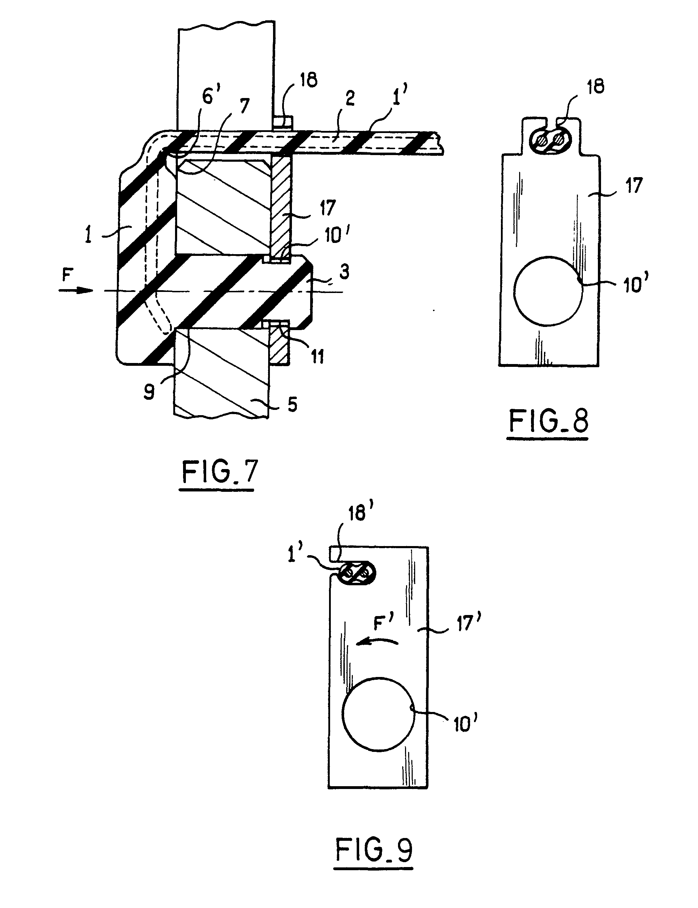

On a représenté aux figures 7 à 9 un troisième mode de réalisation du témoin d'usure suivant l'invention, dans lequel les moyens de fixation comprennent aussi une pièce amovible 17 qui se substitue à la patte du témoin des modes de réalisation précédents, qui est moulée intégralement avec le corps et le téton.

La pièce 17 présente une boutonnière ouverte 18 (voir figure 8). Grâce à cette boutonnière 18, on fixe par clipsage la pièce 17 sur une partie filiforme 1' du témoin, dans une position propre à permettre la fixation ultérieure du témoin sur l'organe de friction, comme on le verra plus loin.

Pour fixer, le témoin suivant la troisième mode de réalisation de l'invention sur la plaque de support 5, on insère le téton 3, suivant la flèche F' (Figure 7) dans un trou 9 percé dans cette plaque et on rabat la partie filiforme 1' autour de l'arête 7 en 6' pour faire passer l'extrémité débordante du téton 3 dans une ouverture 10' (figure 8) percée dans la pièce amovible 17, préalablement montée sur la partie 1' du témoin. Des moyens de retenue constitués par une gorge annulaire 11 creusée près de l'extrémité du téton 3, assurent l'accrochage de la pièce amovible 17 sur le téton, par appui sur le bord de l'ouverture 10.

A la figure 9 on a représenté un autre mode de réalisation 17' de la pièce amovible qui fait partie des moyens de fixation du témoin suivant ce troisième de réalisation de l'invention. Cette pièce 17' comporte encore une ouverture 10' et une boutonnière ouverte 18', mais cette dernière est découpée sur la pièce 17' de manière à autoriser un montage du témoin équipé de cette pièce qui est différent du montage précédemment décrit.

En effet, pour fixer le témoin équipé de la pièce 17' sur un organe de friction, on passe d'abord le téton 3 dans le trou 9, comme à la figure 7, puis on fixe la pièce 17' sur le téton 3 en passant l'extrémité de celui-ci dans l'ouverture 10'. Après cela, on fait tourner la pièce 17' autour de l'axe du téton, dans le sens de la flèche F'' (Figure 9) pour que la boutonnière 18' vienne se clipser autour de la partie filiforme 1' du témoin d'usure suivant l'invention. Bien entendu, la boutonnière 18' est découpée à une distance de l'axe de l'ouverture 10' qui correspond à l'entre-axe du téton 3 et de la partie 1', après fixation du témoin sur la plaque 5 de l'organe de friction.

La pièce 17 ou 17' est retenue en deux points sur le témoin suivant ce troisième mode de réalisation de l'invention, en assurant ainsi la fixation sûre de celui-ci sur la plaque 5.

Les trois modes de réalisation du témoin suivant l'invention apparaissent ainsi comme étant de réalisation peu coûteuse, d'installation facile, rapide et sûre, et de fonctionnement non erratique grâce à la netteté de la coupure de la boucle.

Bien entendu l'invention n'est pas limitée aux modes de réalisation décrits et représentés qui n'ont été donnés qu'à titre d'exemples. En particulier, bien que la description fasse état d'une fixation d'un témoin suivant l'invention sur un organe de friction de frein à disque, il est clair que ce témoin pourrait tout aussi bein être monté sur un organe de friction d'un frein à tambour, au prix d'une adaptation évidente pour l'homme de métier.

De même, bien que les témoins décrits comprenant un conducteur agencé de manière que sa continuité électrique soit rompue en cas d'usure limite de l'organe de friction associé, ceci pour disposer de la possibilité de test mentionnée en préambule, il est claire que l'on pourrait réaliser un témoin plus simple présentant cependant les autres avantages du témoin suivant l'invention, en noyant dans le corps du témoin l'extrémité libre d'un conducteur à fil unique à la place de la boucle prévu dans le témoin suivant l'invention.

Enfin, la pièce amovible peut être réalisée en tout matériau convenable, métallique ou plastique par exemple. En particulier, elle peut être constituée avec la matière plastique utilisée pour le surmoulage du conducteur du témoin.

## Revendications

1. Témoin d'usure d'une garniture de friction montée sur une plaque de support (5) d'un organe de friction pour frein de véhicule automobile, conçu pour être monté sur l'organe de friction de manière qu'un conducteur électrique (2) formant partie du témoin soit attaqué par une pièce rotative formant partie du frein quand l'organe de friction atteint une épaisseur inférieure à une valeur prédéterminée, ce témoin comprenant un corps allongé (1) qui supporte le conducteur électrique (2) et des moyens de fixation sur l'organe de friction qui comporte un téton (3) conformé pour passer dans un trou (9) percé près d'un bord de la plaque de support de l'organe de friction, caractérisé en ce que lesdits moyens de fixation comprennent en outre une patte (4, 17, 17'), ledit téton (3) étant placé sur le témoin d'usure de part et d'autre d'une partie déformable de celui-ci et s'accrochent après pliage de ladite partie déformable, dans une ouverture (10, 10') percée dans la patte.

2. Témoin conforme à la revendication 1, caractérisé en ce qu'il comprend des moyens de retenue (11) pour assurer l'accrochage du téton (3) dans l'ouverture (10, 10') de la patte (4, 17, 17').

3. Témoin conforme à la revendication 2, caractérisé en ce que lesdits moyens de retenue sont constitués par une gorge annulaire creusée près de l'extrémité du téton (3) et coopérant avec l'ouverture (10, 10') pour retenir la patte (4, 17, 17') contre la plaque de support (5) du patin.

4. Témoin conforme à l'une quelconque des revendications 1 à 3, caractérisé en ce que la patte (4) est formée d'une pièce avec le corps (1) et le téton (3), en matière plastique moulée, le pied (4') de la patte (4) étant aminci pour autoriser un basculement de celle-ci sur le corps (1).

5. Témoin conforme à l'une quelconque des revendications précédentes, caractérisé en ce que la partie déformable du corps comprend un sillon d'affaiblissement (6) définissant un axe de pliage du corps (1).

6. Témoin conforme à l'une quelconque des revendications précédentes, caractérisé en ce que la patte (4) est une plaquette rapportée (17, 17') découpée d'une boutonnière (18, 18') agencée de manière à permettre l'accrochage de la plaquette (17, 17') sur le corps (1).

7. Témoin conforme à l'une quelconque des revendications précédentes, caractérisé en ce que la partie déformable (6') est constituée par le raccordement d'une partie filiforme (1') enveloppant le conducteur, au corps (1) du témoin.

8. Témoin conforme à l'une quelconque des revendications précédentes, caractérisé en ce que la pièce amovible (17, 17') est découpée d'une boutonnière ouverte (18, 18') agencée de manière à permettre l'accrochage de la pièce sur une partie filiforme (1') du témoin.

9. Témoin conforme à la revendication 8 caractérisé en ce que la boutonnière ouverte (18'), est agencée de manière à permettre l'accrochage de la pièce amovible (17') sur la partie filiforme (1') par rotation de la pièce amovible autour d'un axe du téton (3).

10. Témoin conforme à l'une quelconque des revendications précédentes, caractérisé en ce que le conducteur (2) comporte une partie en forme de boucle qui se développe, après fixation du témoin sur l'organe de friction, dans un plan parallèle au plan d'usure du témoin, une extrémité (12) de cette boucle étant ancrée dans la matière du corps par pliage, cette boucle étant ainsi agencée pour être coupée par la pièce rotative du frein quand l'usure limite de l'organe de friction est atteinte.

11. Témoin conforme à l'une quelconque des revendications précédentes caractérisé en ce que le conducteur comprend une plaquette métallique (14) qui ponte deux extrémités adjacentes (2, 2'') de fils électriques formant partie du conducteur pour en assurer la continuité électrique, cette plaque métallique étant agencée dans le corps (1) de manière à être arrachée par la pièce rotative du frein quand l'usure limite de l'organe de friction est atteinte.

12. Témoin conforme à la revendication 11 caractérisé en ce que la plaquette est glissée dans des rainures (15', 15'') formées dans une découpe (16) du corps (1).

13. Organe de friction pour frein à disque ou à tambour, équipé d'un témoin d'usure conforme à l'une quelconque des revendications précédentes.

## Patentansprüche

1. Verschleißanzeige für einen an einer Trägerplatte (5) einer Reibvorrichtung für eine Kraftfahrzeugbremse angebrachten Reibbelag, wobei die Verschleißanzeige so an der Reibvorrichtung angebracht ist, daß ein einen Teil der Anzeige bildender elektrischer Leiter (2) durch ein einen Teil der Bremse bildendes drehbares Teil angegriffen wird, wenn die Reibvorrichtung eine einen vorgegebenen Wert besitzende, kleinste Dicke erreicht, wobei die Anzeige einen langgestreckten, den elektrischen Leiter (2) haltenden Körper (1) und Befestigungsmittel an der Reibvorrichtung enthält, wobei die Befestigungsmittel einen Ansatz (3) umfassen, der so ausgebildet ist, daß er in ein in der Nähe der Trägerplattenkante der Reibvorrichtung ausgespartes Loch (9) paßt, dadurch gekennzeichnet, daß die Befestigungsmittel ferner eine Klammer (4, 17, 17') umfassen, wobei der Ansatz (3) auf der anderen Seite eines verformbaren Teils der Verschleißanzeige an derselben angebracht ist, und sich nach dem Falten des verformbaren Teils in eine in der Klammer ausgesparte Öffnung (10, 10') einhaken.

2. Anzeige gemäß Anspruch 1, dadurch gekennzeichnet, daß sie Rückhaltmittel (11) umfaßt, um das Einhaken des Ansatzes (3) in die Öffnung (10, 10') der Klammer (4, 17, 17') zu gewährleisten.

3. Anzeige gemäß Anspruch 2, dadurch gekennzeichnet, daß die Rückhaltmittel eine in der Nähe des Endes des Ansatzes (3) ausgetiefte, ringförmige Auskehlung umfassen, die mit der Öffnung (10, 10' zusammenwirkt, um die Klammer (4, 17, 17') gegen die Trägerplatte (5) des Gleitschuhs zurückzuziehen.

4. Anzeige gemäß einem der Ansprüche 1 bis 3, dadurch gekennzeichnet, daß die Klammer (4) einteilig mit dem Körper (1) und dem Ansatz (3) aus geformten Kunststoff ausgebildet ist, wobei der Fuß (4') der Klammer (4) abgeschrägt ist, um ein Schaukeln desselnen am Körper (1) zu ermöglichen.

5. Anzeige gemäß einem der vorangehenden Ansprüche, dadurch gekennzeichnet, daß das verformbare Teil des Körpers eine Schwächungsrille (6) umfaßt, die eine Faltachse des Körpers (1) definiert.

6. Anzeige gemäß einem der vorangehenden Ansprüche, dadurch gekennzeichnet, daß die Klammer (4) ein aus einer länglichen Aussparung (18, 18') ausgeschnittenes, zusammengesetztes Plättchen (17, 17') ist, wobei die Aussparung so angeordnet ist, daß sie das Einhaken des Plättchens (17, 17') am Körper (1) ermöglicht.

7. Anzeige gemäß einem der vorangehenden Ansprüche, dadurch gekennzeichnet, daß das verformbare Teil (6') durch die Verbindung eines den Leiter umhüllenden, drahtförmigen Teils mit dem Körper (1) der Anzeige gebildet wird.

8. Anzeige gemäß einem der vorangehenden Ansprüche, dadurch gekennzeichnet, daß das ablösbare Teil (17, 17') aus einer offenen länglichen Aussparung (18, 18') ausgeschnitten ist, die so angeordnet ist, daß sie das Einhaken dieses Teils am drahtförmigen Teil (1') des Ansatzes ermöglicht.

9. Anzeige gemäß Anspruch 8, dadurch gekennzeichnet, daß die offene längliche Aussparung (18') so angeordnet ist, daß sie das Einhaken des ablösbaren Teils (17') am drahtförmigen Teil (1') durch die Drehung des ablösbaren Teils um eine Achse des Ansatzes (3) ermöglicht.

10. Anzeige gemäß einem der vorangehenden Ansprüche, dadurch gekennzeichnet, daß der Leiter (2) ein Teil in Form einer Öse umfaßt, die sich nach der Befestigung der Anzeige an der Reibvorrichtung in einer zur Verschleißebene der Anzeige parallellen Ebene erstreckt, wobei ein Ende (12) dieser Öse im Material des Körpers durch Abknikken verankert ist und wobei diese Öse derart angeordnet ist, daß sie von dem drehbaren Teil der Bremse abgeschnitten wird, wenn die Verschleißgrenze der Reibvorrichtung erreicht ist.

11. Anzeige gemäß einem der vorangehenden Ansprüche, dadurch gekennzeichnet, daß der Leiter eine metallische Platte (14) umfaßt, das zwei benachbarte Enden (2', 2'') von einen Teil dieses Leiters bildenden Drahtlitzen überbrückt, um die elektrische Verbindung zu gewährleisten, wobei die metallische Platte im Körper (1) so angeordnet ist, daß sie durch das drehbare Teil der Bremse herausgezogen wird, wenn die Verschleißgrenze der Reibvorrichtung erreicht ist.

12. Anzeige gemäß Anspruch 11, dadurch gekennzeichnet, daß die Platte in Rillen (15', 15'') gleitet, die in einem Ausschnitt (16) des Körpers (1) ausgebildet sind.

13. Reibvorrichtung für eine Scheiben- oder Trommelbremse, die mit einer Verschleißanzeige gemäß einem der vorangehenden Ansprüche ausgerüstet ist.

**Claims**

1. Wear indicator for a friction lining mounted on a support plate (5) of a friction member for a motor-vehicle brake, designed to be mounted on the friction member in such a way that an electrical conductor (2) forming part of the indicator is engaged by a rotary piece forming part of the brake when the friction member reaches a thickness below a predetermined value, this indicator comprising an elongate body (1) supporting the electrical conductor (2), and means of fastening to the friction member which comprises a stud (3) shaped so as to enter a hole (9) made near one edge of the support plate of the friction member, characterized in that the said fastening means furthermore comprise a lug (4, 17, 17'), the said stud (3) being placed on the wear indicator on either side of a deformable part of the latter, and, after the bending of the said deformable part, catch in an orifice (10, 10') made in the lug.

2. Indicator according to Claim 1, characterized in that it comprises retention means (11) for ensuring that the stud (3) catches in the orifice (10, 10') of the lug (4, 17, 17').

3. Indicator according to Claim 2, characterized in that the said retention means consist of an annular groove made near the end of the stud (3) and interacting with the orifice (10, 10') in order to retain the lug (4, 17, 17') against the support plate (5) of the brake block.

4. Indicator according to any of Claims 1 to 3, characterized in that the lug (4) is formed in one piece with the body (1) and the stud (3) from moulded plastic, the foot (4') of the lug (4) being thinned to allow a tilting of the latter on the body (1).

5. Indicator according to any of the preceding claims, characterized in that the deformable part of the body has a weakening incision (6) defining a bending axis of the body (1).

6. Indicator according to any of the preceding claims, characterized in that the lug (4) is an attached board (17, 17') cut with a slot (18, 18') arranged so as to allow the catching of the board (17, 17') on the body (1).

7. Indicator according to any of the preceding claims, characterized in that the deformable part (6') is formed by the connection of a wire-shaped part (1') surrounding the conductor to the body (1) of the indicator.

8. Indicator according to any of the preceding claims, characterized in that the removable piece (17, 17') is cut with an open slot (18, 18') arranged so as to allow the catching of the piece on a wire-shaped part (1') of the indicator.

9. Indicator according to Claim 8, characterized in that the open slot (18') is arranged so as to allow the catching of the removable piece (17') on the wire-shaped part (1') as a result of the rotation of the removable piece about an axis of the stud (3).

10. Indicator according to any of the preceding claims, characterized in that the conductor (2) has a loop-shaped part which, after the indicator has been fastened to the friction member, extends in a plane parallel to the wearing plane of the indicator, one end (12) of this loop being anchored in the material of the body by means of bending, this loop thus being designed to be cut by the rotary piece of the brake when the critical wear of the friction member is reached.

11. Indicator according to any of the preceding claims, characterized in that the conductor comprises a metal plate (14) which bridges two adjacent ends (2', 2'') of electrical wires forming part of the conductor, to ensure the electrical continuity of the latter, this metal plate being arranged in the body (1) so as to be torn off by the rotary piece of the plate when the critical wear of the friction member is reached.

12. Indicator according to Claim 11, characterized in that the plate is slipped into flutes (15', 15'') formed in a cut-out (16) of the body (1).

13. Friction member for a disc brake or drum brake, equipped with a wear indicator according to any of the preceding claims.

FIG.1

FIG.2

FIG.3

FIG_4

FIG_5

FIG_6

FIG.7

FIG.8

FIG.9